# EUROPÄISCHE PATENTANMELDUNG

(11) **EP 0 586 814 A2**
(43) Veröffentlichungstag der Anmeldung: **16.03.1994**
(21) Anmeldenummer: 93110488.9
(22) Anmeldetag: 01.07.1993
(51) Int. Cl.: B01D 53/36, B01J 35/04

(54) **Verfahren zur Herstellung von Katalysatoren zur Entfernung von Stickstoffoxiden aus Abgasen**

(30) Priorität: 02.09.1992 DE 4229255
(71) Anmelder: HÜLS AKTIENGESELLSCHAFT, D-45764 Marl (DE)
(72) Erfinder: Nowitzki, Bernd, Dr., D-45772 Marl (DE); Jung, Jürgen, Dr., D-46282 Dorsten (DE); Kretschmer, Helmut, Dr., D-45721 Haltern (DE)

(57) **Zusammenfassung**

Die Erfindung betrifft ein Verfahren zur Herstellung von Katalysatoren zur Entfernung von Stickstoffoxiden aus Abgasen, wobei das gaseinlaufseitige Ende der Katalysatoren mit Biphosphaten und/oder kondensierten Phosphaten und/oder Silikaten und/oder Boraten überzogen und thermisch nachbehandelt ist, wobei das gaseinlaufseitige Ende des Grünkörpers in eine wäßrige Zubereitung aus Biphosphaten und/oder kondensierten Phosphaten und/oder Silikaten und/oder Boraten getaucht und anschließend der Grünkörper bei Temperaturen von 300 bis 700 °C calciniert wird.

## Beschreibung

Die Erfindung betrifft ein Verfahren zur Herstellung von Katalysatoren zur Entfernung von Stickstoffoxiden aus Abgasen, wobei das gaseinlaufseitige Ende der Katalysatoren mit Biphosphaten und/oder kondensierten Phosphaten und/oder Silikaten und/oder Boraten überzogen und thermisch nachbehandelt ist.

Die Entfernung von Stickstoffoxiden aus Abgasen ist bei vielen industriellen Prozessen von allgemeiner Bedeutung.

So entstehen bei der Verbrennung fossiler Energieträger in Kraftwerken Stickstoffoxide, die mit den Rauchgasen in die Umwelt gelangen. Zur Entfernung der Stickstoffoxide aus Rauchgasen durch selektive katalytische Reduktion mit Ammoniak als Reduktionsmittel werden gemäß DE-PS 24 58 888 Katalysatoren auf Basis oberflächenreicher, poröser Titandioxide mit weiteren metalloxidischen bzw. sulfatischen Komponenten eingesetzt. Die zur Entfernung von Stickstoffoxiden eingesetzten Katalysatortypen besitzen eine Vielzahl paralleler Kanäle, deren Achsen in Richtung des Gasstromes orientiert sind. Zur Anwendung kommen vorwiegend monolithische Katalysatoren mit Wabenstruktur (siehe DE-PS 26 58 569 und DE-PS 26 58 539) sowie Katalysatorpakete, bestehend aus einer Vielzahl einzelner, plattenförmiger Strukturen (siehe DE-PS 32 08 634, DE-PS 28 53 023 und DE-PS 29 27 253). Diese Katalysatoren werden häufig in sogenannten "High-Dust"-Schaltungen, bevorzugt bei Temperaturen zwischen 350 und 450 °C, betrieben (siehe DE-PS 26 58 539 und DE-PS 28 34 358). Der katalytische Reaktor befindet sich bei einer solchen "High-Dust"-Schaltung noch vor einem Staubfilter. Das Rauchgas an dieser Stelle ist besonders stark mit Flugasche bzw. Flugstaub beladen, so daß die Katalysatoren zur Entfernung von Stickstoffoxiden vorwiegend von der Anströmseite her starker Abrasion, bedingt durch Flugasche, ausgesetzt sind. Dadurch werden die Betriebszeiten der Katalysatoren deutlich reduziert.

Aus JP-OS 79/71 791 ist ein Katalysator bekannt, der ein in Gasstromrichtung mit Durchbohrungen versehenes Festbett ausbildet, wobei mindestens ein gaseinlaufseitiges vorderes Ende des Katalysators mit einem Stoff, dessen Hauptkomponente aus Biphosphat, kondensiertem Phosphat bzw. Metaphosphat besteht, überzogen und erhitzt ist, um dieses zu verstärken.

Gemäß Beispiel 1 der JP-OS 79/71 791 wird aus einer Katalysatormasse auf Basis Titandioxid ein Wabenkörper durch Extrusion geformt, der Formkörper getrocknet und dann bei 500 °C calziniert. Nach diesem Herstellungsprozeß wird anschließend ein Ende, d. h. die spätere Anströmseite des Katalysators, in eine wäßrige Zubereitung von Aluminiumbiphosphat getaucht, der Katalysator wiederum getrocknet und nochmals bei 500 °C calziniert.

Durch eine solche zusätzlich aufgebrachte Schicht, die die Katalysatorstruktur auf der Anströmseite verstärkt, wird eine deutliche Verbesserung der Abriebbeständigkeit und der Standzeit der Katalysatoren unter "High-Dust"-Bedingungen erreicht.

Die Praxis zeigt, daß der Herstellungsprozeß eines Katalysators gemäß der Lehre der JP-OS 79/71 791 zeit- und kostenintensiv ist.

Durch eine direkte Einarbeitung der verstärkenden Komponente, wie z. B. Aluminiumbiphosphat, in die Katalysatormasse vor der Formgebung kann zwar eine Verbesserung der Katalysatorfestigkeit erreicht werden, jedoch geht gleichzeitig die katalytische Wirksamkeit des gesamten Katalysators deutlich zurück.

Der Erfindung liegt die Aufgabe zugrunde, ein Herstellverfahren für Katalysatoren zur Entfernung von Stickstoffoxiden aus Abgasen zu entwickeln, das es ermöglicht, Katalysatoren mit hoher Abriebbeständigkeit in zeit- und kostensparenderer Weise zu produzieren.

Überraschenderweise wurde nun gefunden, daß man Katalysatoren mit hervorragender Abriebbeständigkeit sehr viel zeit- und kostensparender herstellen kann, indem man das gaseinlaufseitige Ende des Grünkörpers in eine wäßrige Zubereitung aus Biphosphaten und/oder kondensierten Phosphaten und/oder Silikaten und/oder Boraten taucht und anschließend den Grünkörper bei Temperaturen von 300 bis 700 °C calciniert.

Gegenstand der vorliegenden Erfindung ist daher ein Verfahren zur Herstellung von Katalysatoren zur Entfernung von Stickstoffoxiden aus Abgasen, wobei das gaseinlaufseitige Ende der Katalysatoren mit Biphosphaten und/oder kondensierten Phosphaten und/oder Silikaten und/oder Boraten überzogen und thermisch nachbehandelt ist, das dadurch gekennzeichnet ist, daß das gaseinlaufseitige Ende des Grünkörpers in eine wäßrige Zubereitung aus Biphosphaten und/oder kondensierten Phosphaten und/oder Silikaten und/oder Boraten getaucht und anschließend der Grünkörper bei Temperaturen von 300 bis 700 °C calciniert wird.

Unter Grünkörper ist der geformte Katalysator zu verstehen, der zwar schon getrocknet, aber noch nicht calciniert worden ist. Der geformte, aber noch nicht getrocknete Katalysator wird als Formkörper bezeichnet.

Vorzugsweise werden die erfindungemäß hergestellten Katalysatoren zur Entfernung von Stickstoffoxiden aus Rauchgasen eingesetzt.

Für die wäßrige Zubereitung, in die das gaseinlaufseitige Ende des Grünkörpers getaucht wird, sind Biphosphate, verschiedenste kondensierte Phosphate, Silikate und Borate geeignet, wie z. B. Aluminiumbiphosphat, Aluminiumnetaphosphate, Magnesiumbiphosphat, geeignete Magnesiumsilikatvorläuferverbindungen, wie wasserlösliche Magnesiumsalze, z. B. Magnesiumnitrat, und pyrogen hergestellte Kieselsäure, Natriumsilikat, z. B. Na-Wasserglas, und Natriumborate, z. B. Borax.

Vorzugsweise wird das gaseinlaufseitige Ende des Grünkörpers in eine wäßrige Zubereitung aus Aluminiumbiphosphat und/oder kondensierten Aluminiumphosphaten getaucht.

Geeigneterweise kann man auch das gaseinlaufseitige Ende des Grünkörpers in eine wäßrige Zubereitung aus Natriumsilikat und/oder Vorläuferverbindungen für die Bildung der Magnesiumsilikate tauchen oder auch in eine wäßrige Zubereitung aus Aluminiumbiphosphat und/oder kondensierten Aluminiumphosphaten und/oder Natriumsilikat.

Vorzugsweise wird der Grünkörper bei Temperaturen von 430 bis 580 °C calciniert.

Die erfindungsgemäß hergestellten Katalysatoren können die verschiedensten Formen besitzen, wie z. B. die Form von Wabenkörpern oder Platten.

Die verschiedenen Katalysatortypen zur Entfernung von Stickstoffoxiden aus Abgasen sowie auch die erfindungsgemäß hergestellten Katalysatoren haben gemeinsam, daß sie einen überwiegenden Anteil an porösem Titandioxid enthalten und die Formkörper im Herstellungsprozeß einem nachfolgenden Trocknungsschritt unterzogen werden. Hierbei entsteht der Grünkörper. Die Grünkörper werden nun beim erfindungsgemäßen Herstellverfahren mit ihrem gaseinlaufseitigen Ende, d. h. mit der späteren Anströmseite des Katalysators, in eine wäßrige Zubereitung aus Biphosphaten und/oder kondensierten Phosphaten und/oder Silikaten und/oder Boraten getaucht, und zwar vorzugsweise 0,5 bis 10 cm tief.

Die Viskosität der erfindungsgemäß verwendeten wäßrigen Zubereitung wird über ihren Wassergehalt so eingestellt, daß die nur durch Trocknung verfestigte Struktur der zu tauchenden Grünkörper sich nicht auflöst. Bei der Tauchung wird eine hinreichend dicke Schicht, die das gaseinlaufseitige Ende des Grünkörpers, d. h. die spätere Anströmseite des Katalysators, verstärkt, aufgebracht bzw. dringt bis in das relativ poröse Material des Grünkörpers ein. Der so vorbehandelte Grünkörper wird anschließend bei Temperaturen von 300 bis 700 °C calciniert, vorzugsweise bei Temperaturen von 430 bis 580 °C.

### Beispiel 1 (Vergleichsbeispiel)

Metatitansäure, ein Zwischenprodukt bei der Herstellung von Titandioxid über den Schwefelsäureprozeß, wurde nach Neutralisation und Waschen mit entsalztem Wasser sowie partieller Peptisierung mit Salpetersäure durch Kalzinieren bei 450 °C über 5 h in ein aktiviertes Titandioxid vom Anatas-Typ überführt. Das so erhaltene Material wurde zu Kornfraktionen von 2 bis 12 µm aufgemahlen.

Eine Lösung aus 24 kg Ammoniummetawolframat in 40 kg entsalztem Wasser sowie eine Lösung aus 19,4 kg Ammoniummetavanadat in 45 kg Monoethanolamin wurden zusammen mit 213 kg aktiviertem Titandioxidpulver, 16 kg E-Glasfasern (Durchmesser 13 µm, Länge 4,5 mm), 7 kg hochmolekularem Polyethylenglykol und weiteren 85 kg entsalztem Wasser in einem Mischaggregat geknetet. Die Knetmischung wurde mit Hilfe eines Vakuumschneckenextruders über ein Extrusionswerkzeug zu Formkörpern extrudiert, die erhaltenen Formkörper wurden dann vorgetrocknet und bei 100 °C über 16 h getrocknet. Die so hergestellten Grünkörper wurden anschließend für 5 h bei 480 °C in einem elektrisch beheizten bzw. gasbefeuerten Brennofen kalziniert. Die so hergestellten Wabenkatalysatoren besaßen eine axiale Länge von 500 mm, einen Querschnitt von 150 x 150 mm, eine quadratische Zellteilung von 7,1 mm (7,1 pitch) und Innenwände mit 1,00 mm Dicke sowie Außenwände mit 1,7 mm Dicke.

Zur Testung der Wabenkatalysatoren auf Abriebbeständigkeit wurde jeweils ein ganzer Wabenkörper in eine Strömungsapparatur eingesetzt und das gaseinlaufseitige Ende der Waben unter einem Winkel von 45 ° mit einem Quarzsand-beladenen Luftstrom über 8 h angeströmt (Anströmgeschwindigkeit 17 m/s bei einer Temperatur von 40 bis 50 °C, Sandkonzentration 50 bis 60 g/m³ Luft, Quarzsand einer Kornfraktion von 100 bis 300 µm). Die Wabenkatalysatoren verloren im Abriebtest bis 4 Gew.-% an Katalysatormasse.

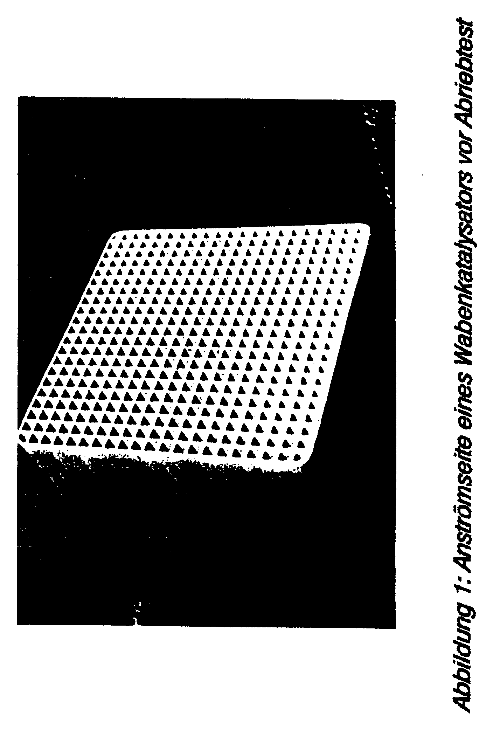

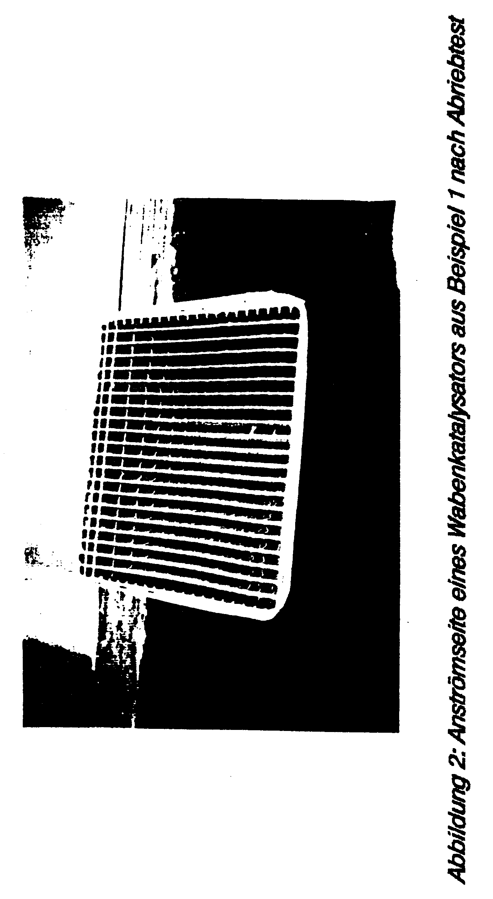

Abbildung 1 zeigt die Anströmseite eines Wabenkatalysators vor dem Abriebtest. In Abbildung 2 ist dieser Wabenkatalysator aus Beispiel 1 nach dem Abriebtest dargestellt. Man erkennt deutlich, daß viele Stege wegerodiert sind.

### Beispiel 2

Aus 50,8 kg Aluminiumhydroxid (Fa. Martinswerke), 120,4 kg entsalztem Wasser und 211,4 kg o-Phosphorsäure (75 %ig) wurde über 6 h bei 50 bis 80 °C eine Aluminiumphosphatzubereitung hergestellt (Viskosität der Zubereitung nach Brookfieldmessung 120 mPas).

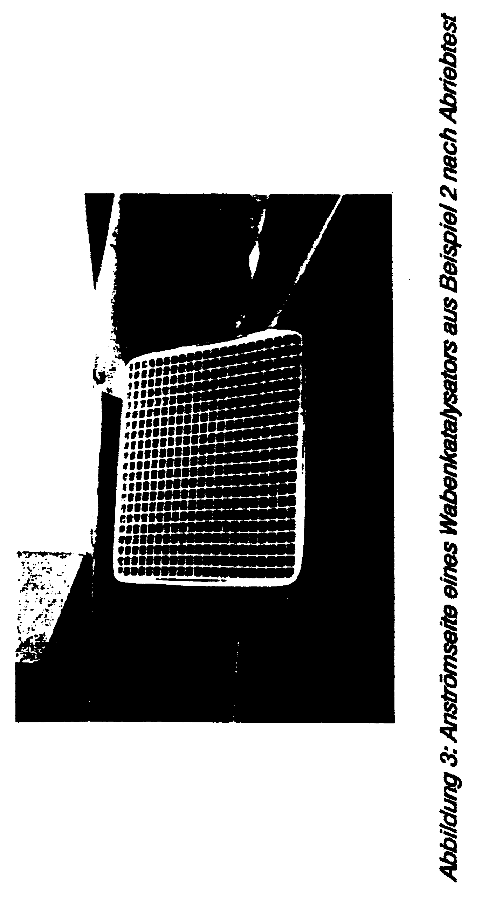

Ein gemäß Beispiel 1 hergestellter, getrockneter Formkörper (Grünkörper) wurde mit dem gaseinlaufseitigen Ende 30 bis 60 sec lang 3 cm tief in die Aluminiumphosphatzubereitung getaucht und kurz mit Preßluft durchströmt. Der so behandelte Grünkörper wurde danach 5 h bei 480 °C in einem elektrisch beheizten bzw. gasbefeuerten Brennofen kalziniert.
Der so auf der Anströmseite verstärkte, erfindungsgemäße Wabenkatalysator verlor im Abriebtest (siehe Beispiel 1) weniger als 1 Gew.-% an Katalysatormasse, vgl. Abb. 1 und Abb. 3. Abbildung 3 zeigt die Anströmseite des erfindungsgemäßen Wabenkatalysators aus Beispiel 2 nach dem Abriebtest. Der erfindungsgemäße Wabenkatalysator weist praktisch keine Erosionsschäden auf.

## Patentansprüche

1. Verfahren zur Herstellung von Katalysatoren zur Entfernung von Stickstoffoxiden aus Abgasen, wobei das gaseinlaufseitige Ende der Katalysatoren mit Biphosphaten und/oder kondensierten Phosphaten und/oder Silikaten und/oder Boraten überzogen und thermisch nachbehandelt ist,
dadurch gekennzeichnet,
daß das gaseinlaufseitige Ende des Grünkörpers in eine wäßrige Zubereitung aus Biphosphaten und/oder kondensierten Phosphaten und/oder Silikaten und/oder Boraten getaucht und anschließend der Grünkörper bei Temperaturen von 300 bis 700 °C calciniert wird.

2. Verfahren nach Anspruch 1,
dadurch gekennzeichnet,
daß das gaseinlaufseitige Ende des Grünkörpers in eine wäßrige Zubereitung aus Aluminiumbiphosphat und/oder kondensierten Aluminiumphosphaten getaucht wird.

3. Verfahren nach Anspruch 1,
dadurch gekennzeichnet,
daß das gaseinlaufseitige Ende des Grünkörpers in eine wäßrige Zubereitung aus Natriumsilikat und/oder Vorläuferverbindungen für die Bildung der Magnesiumsilikate getaucht wird.

4. Verfahren nach den Ansprüchen 1 bis 3,
dadurch gekennzeichnet,
daß der Grünkörper bei Temperaturen von 430 bis 580 °C calciniert wird.

5. Verfahren nach den Ansprüchen 1 bis 4,
dadurch gekennzeichnet,
daß die Katalysatoren zur Entfernung von Stickstoffoxiden aus Rauchgasen eingesetzt werden.
